(19) Europäisches Patentamt / European Patent Office / Office européen des brevets

(11) **EP 3 549 070 B1**

(12) **FASCICULE DE BREVET EUROPEEN**

(45) Date de publication et mention de la délivrance du brevet:
**22.11.2023 Bulletin 2023/47**

(21) Numéro de dépôt: **17816975.1**

(22) Date de dépôt: **04.12.2017**

(51) Classification Internationale des Brevets (IPC):
**G06N 3/065** (2023.01)   **G06N 3/049** (2023.01)
**G06N 3/088** (2023.01)

(52) Classification Coopérative des Brevets (CPC):
**G06N 3/049; G06N 3/065; G06N 3/088**

(86) Numéro de dépôt international:
**PCT/FR2017/053364**

(87) Numéro de publication internationale:
**WO 2018/100325 (07.06.2018 Gazette 2018/23)**

(54) **DISPOSITIF ET PROCÈDE DE MODULATION, SYNAPSE ARTIFICIELLE COMPORTANT LEDIT DISPOSITIF DE MODULATION, PROCÈDE DE PLASTICITÉ A COURT TERME DANS UN RÉSEAU DE NEURONES ARTIFICIELS COMPORTANT LADITE SYNAPSE ARTIFICIELLE**

MODULATIONSVORRICHTUNG UND VERFAHREN, KÜNSTLICHE SYNAPSE MIT DIESER MODULATIONSVORRICHTUNG, KURZZEITIGES PLASTIZITÄTSVERFAHREN IN EINEM KÜNSTLICHEN NEURONALEN NETZ MIT DIESER KÜNSTLICHEN SYNAPSE

MODULATION DEVICE AND METHOD, ARTIFICIAL SYNAPSE COMPRISING SAID MODULATION DEVICE, SHORT-TERM PLASTICITY METHOD IN AN ARTIFICIAL NEURAL NETWORK COMPRISING SAID ARTIFICIAL SYNAPSE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2016 FR 1661847**

(43) Date de publication de la demande:
**09.10.2019 Bulletin 2019/41**

(73) Titulaires:
• **Commissariat à l'Énergie Atomique et aux Énergies Alternatives**
**75015 Paris (FR)**
• **Institut National de la Santé et de la Recherche Médicale (INSERM)**
**75013 Paris (FR)**

(72) Inventeurs:
• **WERNER, Thilo**
**38000 Grenoble (FR)**
• **BICHLER, Olivier**
**91300 Massy (FR)**
• **VIANELLO, Elisa**
**38000 Grenoble (FR)**
• **YVERT, Blaise**
**38120 St Egreve (FR)**

(74) Mandataire: **Cabinet Camus Lebkiri**
**25 rue de Maubeuge**
**75009 Paris (FR)**

(56) Documents cités:
• **P. GIORGIO ET AL: "Stochastic neuron design using conductive bridge RAM", PROCEEDINGS OF THE 2013 IEEE/ACM INTERNATIONAL SYMPOSIUM ON NANOSCALE ARCHITECTURES (NANOARCH'13), 15 juillet 2013 (2013-07-15), pages 95-100, XP032498569, DOI: 10.1109/NanoArch.2013.6623051**
• **T. WERNER ET AL: "Spiking neural networks based on OxRAM synapses for real-time unsupervised spike sorting", FRONTIERS IN NEUROSCIENCE, vol. 10, 474, 3 novembre 2016 (2016-11-03) , XP055342017, DOI: 10.3389/fnins.2016.00474**

- M. SURI ET AL: "Bio-inspired stochastic computing using binary CBRAM synapses", IEEE TRANSACTIONS ON ELECTRON DEVICES, vol. 60, no. 7, 4 juin 2013 (2013-06-04), pages 2402-2409, XP011515274, DOI: 10.1109/TED.2013.2263000
- O. BICHLER ET AL: "Visual pattern extraction using energy-efficient 2-PCM synapse neuromorphic architecture", IEEE TRANSACTIONS ON ELECTRON DEVICES, vol. 59, no. 8, 17 mai 2012 (2012-05-17), pages 2206-2214, XP011453738, DOI: 10.1109/TED.2012.2197951 cité dans la demande
- E. CHICCA ET AL: "Neuromorphic electronic circuits for building autonomous cognitive systems", PROCEEDINGS OF THE IEEE, vol. 102, no. 9, 1 mai 2014 (2014-05-01), pages 1367-1388, XP011556825, DOI: 10.1109/JPROC.2014.2313954
- T. WERNER ET AL: "Experimental demonstration of short and long term synaptic plasticity using OxRAM multi k-bit arrays for reliable detection in highly noisy input data", PROCEEDINGS OF THE 2016 IEEE INTERNATIONAL ELECTRON DEVICES MEETING (IEDM'16), 3 décembre 2016 (2016-12-03), XP033054995, DOI: 10.1109/IEDM.2016.7838433

**Description**

## DOMAINE TECHNIQUE DE L'INVENTION

Le domaine technique de l'invention est celui des réseaux de neurones artificiels, ou circuits neuromorphiques. La présente invention concerne un dispositif et un procédé de modulation, ainsi qu'une synapse artificielle comportant ledit dispositif de modulation et un procédé de plasticité à court terme dans un réseau de neurones artificiels comportant ladite synapse artificielle. Un domaine d'application de la présente invention est notamment le traitement du signal, par exemple le traitement d'images ou le traitement de signaux neuronaux.

## ARRIERE-PLAN TECHNOLOGIQUE DE L'INVENTION

D'une manière générale, un réseau de neurones artificiels comporte une pluralité de neurones artificiels et une pluralité de synapses artificielles. Chaque synapse artificielle assure une connexion entre deux neurones artificiels. Chaque neurone artificiel est connecté à une pluralité d'autres neurones artificiels.

Chaque synapse artificielle présente typiquement une conductance électriquement réglable et un poids synaptique proportionnel à sa conductance. Chaque neurone artificiel présente typiquement un potentiel, également appelé potentiel de membrane ou potentiel transmembranaire. Lorsqu'une synapse artificielle transmet une impulsion à un neurone artificiel, le potentiel du neurone artificiel est modifié en fonction du poids synaptique de la synapse artificielle. Par exemple, dans le cas d'une synapse artificielle excitatrice, plus le poids synaptique est important, plus le potentiel du neurone artificiel augmente. Au contraire, dans le cas d'une synapse artificielle inhibitrice, plus le poids synaptique est important, plus le potentiel du neurone artificiel diminue.

Si l'on considère une synapse artificielle donnée, connectant un premier neurone artificiel à un deuxième neurone artificiel, on entend par « impulsion présynaptique » une impulsion émise par le premier neurone artificiel et transmise par ladite synapse artificielle au deuxième neurone artificiel, et on entend par « impulsion postsynaptique » une impulsion émise par le deuxième neurone artificiel. Dans ce cas, le premier neurone artificiel est également appelé neurone présynaptique, et le deuxième neurone artificiel est également appelé neurone postsynaptique.

Plusieurs études se sont attachées à implémenter un mécanisme de plasticité à long terme LTP (de l'anglais « long term plasticity ») pour les synapses artificielles. Selon ce mécanisme, le poids synaptique d'une synapse artificielle est modifié en fonction des impulsions émises par le neurone postsynaptique :

-   si, peu avant l'émission de l'impulsion postsynaptique, le neurone présynaptique a émis une impulsion, alors le poids synaptique de la synapse artificielle augmente ;

-   sinon, le poids synaptique de la synapse artificielle diminue.

Un tel mécanisme contribue en effet à permettre un apprentissage non-supervisé du réseau de neurones artificiels. On entend généralement par « apprentissage » le fait que le réseau de neurones artificiels apprend à traiter différents types de motifs d'entrée, en convergeant vers un état final propre à chaque type de motif d'entrée. Un apprentissage est dit « non-supervisé » lorsque le réseau de neurones artificiels, à partir d'un motif qui lui est présenté, n'est pas forcé de converger vers un état final précis mais est laissé libre de converger vers n'importe quel état final.

Les articles intitulés « Variability-tolerant convolutional neural network for pattern recognition applications based on OxRAM synapses » (D. Garbin et al., IEDM 2014) et « Real-time decoding of brain activity by embedded Spiking Neural Networks using OxRAM synapses» (T. Werner et al., ISCAS 2016) ont par exemple décrit l'implémentation d'un mécanisme de plasticité à long terme LTP pour des synapses artificielles réalisées au moyen de mémoires résistives non-volatiles ayant chacune uniquement deux états résistifs distincts. Les articles intitulés « Phase change memory as synapse for ultra-dense neuromorphic systems : application to complex visual pattern extraction » (M. Suri et al., IEDM 2011) et « Visual pattern extraction using energy-efficient "2-PCM Synapse" neuromorphic architecture » (O. Bichler et al., TED 2012) ont quant à eux décrit l'implémentation d'un mécanisme de plasticité à long terme LTP pour des synapses artificielles réalisées au moyen de mémoires résistives non-volatiles ayant chacune au moins trois états résistifs distincts.

En 2013, Palma et al. (Stochastic neuron design using conductive bridge RAM ; actes de NanoArch 2013, pages 95-100) décrivirent un circuit neuromorphique hybride à comportement stochastique.

Les réseaux de neurones artificiels connus sont toutefois sensibles au bruit. Ils ont en effet tendance, lorsque les motifs d'entrée sont bruités, à « apprendre du bruit », ce qui dégrade leurs performances.

## RESUME DE L'INVENTION

L'invention contribue avantageusement à permettre un apprentissage non-supervisé d'un réseau de neurones artificiels tout en améliorant la robustesse au bruit dudit réseau de neurones artificiels.

L'invention est définie dans les revendications.

Le dispositif de modulation selon le premier aspect de l'invention est avantageusement apte à implémenter un mécanisme de plasticité à court terme STP (de l'anglais « Short Term Plasticity »).

Le bloc de contrôle n'est apte à émettre que deux types distincts d'impulsions, ce qui simplifie l'électronique associée.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

- La figure 1a montre un dispositif de modulation selon un premier mode de réalisation de l'invention.
- La figure 1b montre un dispositif de modulation selon un deuxième mode de réalisation de l'invention.
- La figure 2a montre une implémentation particulière du dispositif de modulation de la figure 1a.
- La figure 2b montre une implémentation particulière du dispositif de modulation de la figure 1b.
- La figure 3 illustre un procédé de modulation au moyen d'un dispositif de modulation selon l'un des modes de réalisation de l'invention.
- La figure 4a montre une synapse artificielle comportant un dispositif de modulation selon l'un des modes de réalisation de l'invention ainsi qu'un deuxième dispositif de modulation.
- La figure 4b montre une implémentation particulière de la synapse artificielle de la figure 2a.
- La figure 5a montre une représentation schématique d'un réseau de neurones artificiels comportant des première, deuxième et troisième couches de neurones artificiels.
- La figure 5b montre un exemple de connexion des première et deuxième couches du réseau de neurones artificiels de la figure 5a, au moyen de synapses artificielles selon la figure 2a.

**DESCRIPTION DETAILLEE D'AU MOINS UN MODE DE REALISATION DE L'INVENTION**

Sauf précision contraire, un même élément apparaissant sur des figures différentes présente une référence unique.

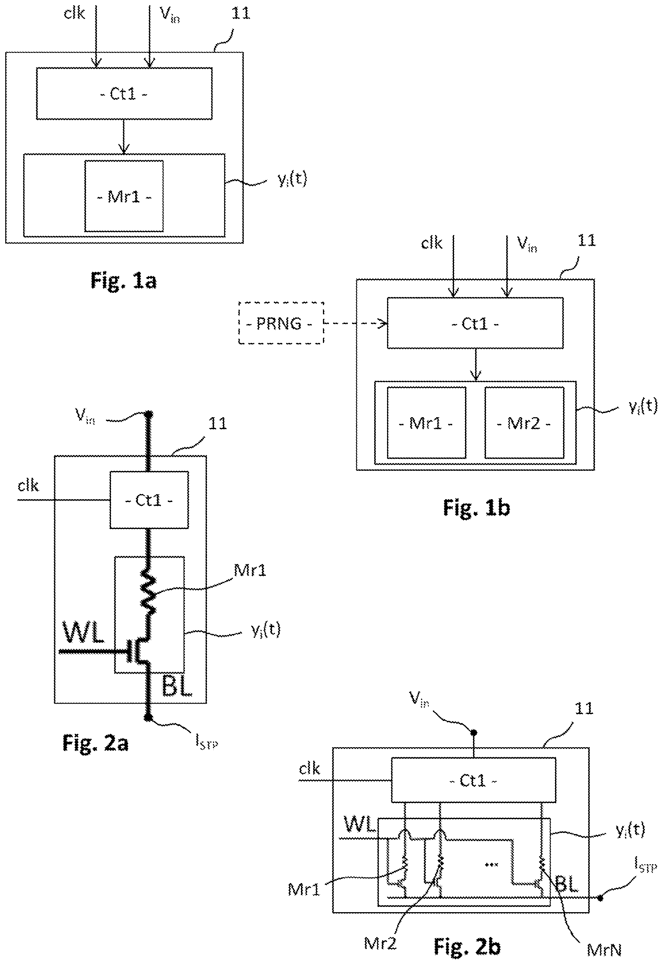

Les figures 1a et 1b montrent respectivement un dispositif de modulation 11 selon des premier et deuxième modes de réalisation. Elles sont décrites conjointement. Le dispositif de modulation 11 selon l'un quelconque des modes de réalisation comporte un bloc de contrôle Ct1 apte à :

- recevoir un signal d'horloge clk, et
- recevoir une impulsion de tension d'entrée $V_{in}$.

Contrairement à l'impulsion de tension d'entrée $V_{in}$, le signal d'horloge clk a une fréquence moyenne fixée. Le signal d'horloge clk peut être régulier ou aléatoire, par exemple selon une loi de Poisson.

Le dispositif de modulation 11 selon l'un quelconque des modes de réalisation présente une conductance équivalente $y_i(t)$. Selon le premier mode de réalisation, le dispositif de modulation 11 comporte un unique dispositif memristif Mr1 et la conductance équivalente $y_i(t)$ est réalisée par cet unique dispositif memristif Mr1. Selon le premier mode de réalisation, l'unique dispositif memristif Mr1 est préférentiellement de type multivalué, c'est-à-dire qu'il a au moins trois états résistifs distincts. Dans le cadre de la présente invention, les termes « multivalué » et « analogique » sont indifféremment employés. Un tel dispositif multivalué est par exemple une combinaison de deux mémoires résistives à changement de phase PCRAM. Selon le deuxième mode de réalisation, le dispositif de modulation 11 comporte des premier et deuxième dispositifs memristifs Mr1, Mr2, qui réalisent la conductance équivalente $y_i(t)$. Selon le deuxième mode de réalisation, chaque dispositif memristif est préférentiellement de type binaire, c'est-à-dire n'ayant chacun que deux états résistifs distincts. De tels dispositifs binaires sont par exemple des mémoires résistives OxRAM ou des mémoires résistives CBRAM. Selon une alternative non illustrée, le dispositif de modulation 11 pourrait comporter trois dispositif memristifs ou plus, qui réaliseraient la conductance équivalente $y_i(t)$.

Un dispositif memristif est un composant électronique à deux terminaux qui se comporte comme une résistance ou une conductance, dont la valeur change dynamiquement avec l'application d'un courant ou d'une tension à ses bornes. Un dispositif de ce type peut être caractérisé par les équations suivantes :

$$i = G.v$$

$$\frac{dG}{dt} = f(v, G)$$

où G est la conductance du dispositif qui relie son courant d'entrée i à la tension à ses bornes v. Des dispositifs memristifs sont par exemple :

- les dispositifs RRAM (de l'anglais « Resistive Random Access Memory »), parmi lesquels les dispositifs CBRAM (de l'anglais « Conductive-Bridging RAM) et les dispositifs OxRAM (de l'anglais « Oxide résistive RAM ») ;
- les dispositifs PCRAM (de l'anglais « Phase-Change RAM ») ;
- les dispositifs MRAM (de l'anglais « Magnetic RAM »).

Chaque dispositif memristif du dispositif de modulation 11 est préférentiellement un dispositif CBRAM ou un dispositif OxRAM.

Selon l'un quelconque des modes de réalisation, le bloc de contrôle Ct1 est apte à :

- réaliser une première modification de la conductan-

ce équivalence $y_i(t)$ à la réception de chaque signal d'horloge clk, et

- réaliser une deuxième modification de la conductance équivalente $y_i(t)$ à la réception de chaque impulsion d'entrée $V_{in}$.

Les première et deuxième modifications sont de sens opposé. Deux cas particuliers sont donc possibles :

- soit la première modification est une augmentation de la conductance équivalente et la deuxième modification est une diminution de la conductance équivalente ;
- soit la première modification est une diminution de la conductance équivalente et la deuxième modification est une augmentation de la conductance équivalente.

La première modification qui a lieu à chaque signal d'horloge clk est préférentiellement strictement inférieure, en valeur absolue, à la deuxième modification qui a lieu à chaque impulsion d'entrée $V_{in}$.

Selon l'un quelconque des modes de réalisation, le bloc de contrôle Ct1 est avantageusement apte à :

- émettre une impulsion d'un premier type à destination de chaque dispositif memristif afin de réaliser la première modification de la conductance équivalente $y_i(t)$, et
- émettre une impulsion d'un deuxième type à destination de chaque dispositif memristif afin de réaliser la deuxième modification de la conductance équivalente $y_i(t)$.

Le bloc de contrôle Ct1 n'émet ainsi que deux types distincts d'impulsions électriques de programmation. Chaque première modification de la conductance équivalente $y_i(t)$ est obtenue grâce à une ou plusieurs impulsions du premier type, et chaque deuxième modification de la conductance équivalente $y_i(t)$ est obtenue grâce à une ou plusieurs impulsions du deuxième type. Chaque impulsion du premier type présente notamment une même première durée et une même première amplitude. Chaque impulsion du deuxième type présente notamment une même deuxième durée et une même deuxième amplitude. On permet ainsi que l'électronique associée au bloc de contrôle Ct1 soit particulièrement simple.

Selon le deuxième mode de réalisation, le bloc de contrôle Ct1 réalise avantageusement les première et deuxième modifications de la conductance équivalente $y_i(t)$ via une consigne qu'il reçoit d'un générateur de nombres pseudo-aléatoires PRNG. Les moyens du bloc de contrôle Ct1 pour réaliser les première et deuxième modifications de la conductance équivalente $y_i(t)$ comprennent donc avantageusement des moyens pour recevoir une consigne d'un générateur de nombres pseudo-aléatoires PNRG. Le bloc de contrôle Ct1 peut comporter le générateur de nombres pseudo-aléatoires PNRG, ou bien le générateur de nombres pseudo-aléatoires PNRG peut être séparé du bloc de contrôle Ct1.

La figure 2a montre un exemple d'implémentation du dispositif de modulation 11 selon le premier mode de réalisation de l'invention. Selon cet exemple, le dispositif de modulation 11 comporte un unique dispositif memristif Mr1 de type multivalué.

La figure 2b montre un exemple d'implémentation du dispositif de modulation 11 selon le deuxième mode de réalisation de l'invention. Selon cet exemple, le dispositif de modulation 11 comporte une pluralité de dispositifs memristifs Mr1, Mr2, ..., MrN de type binaire. Chaque mémoire résistive binaire est typiquement agencée en série avec un transistor. Alternativement, le dispositif de modulation 11 pourrait comporter une pluralité de dispositifs memristifs de type multivalué.

Le dispositif de modulation 11 selon l'un quelconque des modes de réalisation présente un premier mode, dit « mode lecture » et un deuxième mode, dit « mode écriture ». Le mode lecture est un mode durant lequel la conductance équivalente $y_i(t)$ ne peut pas être modifiée, à la différence du mode écriture. Quand le bloc de contrôle Ct1 du dispositif de modulation 11 reçoit un signal d'horloge clk, il génère en mode écriture au moins une première impulsion de tension d'écriture qui réalise la première modification de la conductance équivalente $y_i(t)$. Quand le bloc de contrôle Ct1 du dispositif de modulation 11 reçoit une impulsion de tension d'entrée $V_{in}$, il génère en mode lecture une impulsion de tension de lecture qui se propage à travers chaque dispositif memristif, et il génère en mode écriture au moins une deuxième impulsion de tension d'écriture qui réalise la deuxième modification de la conductance équivalente $y_i(t)$.

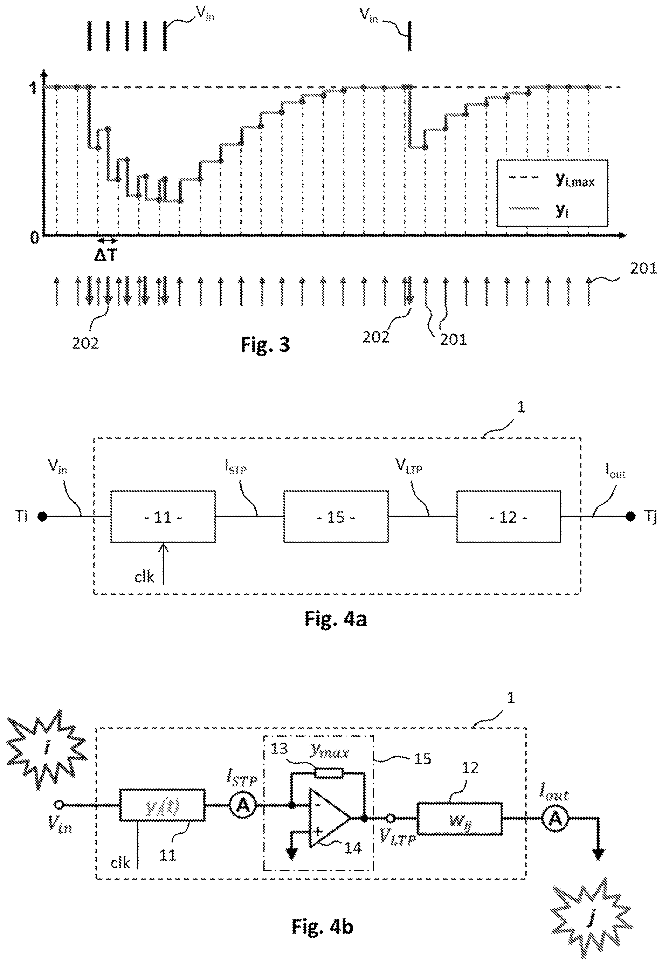

La figure 3 illustre un procédé de modulation au moyen du dispositif de modulation 11 selon l'un quelconque des modes de réalisation, dans le premier cas particulier où :

- la première modification de la conductance équivalente $y_i(t)$, qui est réalisée à la réception de chaque signal d'horloge clk, est une augmentation de la conductance équivalente $y_i(t)$, et
- la deuxième modification de la conductance équivalente $y_i(t)$, qui est réalisée à la réception de chaque impulsion de tension d'entrée $V_{in}$, est une diminution de la conductance équivalente $y_i(t)$.

En l'absence de toute impulsion de tension d'entrée $V_{in}$, la conductance équivalente $y_i(t)$ du dispositif de modulation 11 passe typiquement de sa valeur minimale $y_{min}$ à sa valeur maximale $y_{max}$ dans un temps de relaxation proportionnel à $\tau_D$, grâce aux premières impulsions de tension d'écriture 201 émises à la réception de chaque signal d'horloge clk. Deux signaux d'horloge consécutifs sont typiquement séparés par une durée $\Delta T$.

Dès que le dispositif de modulation 11 reçoit une impulsion de tension d'entrée $V_{in}$, sa conductance équivalente $y_i(t)$ diminue grâce à une ou plusieurs deuxièmes impulsions de tension d'écriture 202. La diminution de la conductance équivalente $y_i(t)$, et donc les caractéristiques de la ou des deuxièmes impulsions de tension d'écriture 202, sont fonction d'un coefficient de diminution $f_D$ et du temps de relaxation $\tau_D$. Le coefficient de diminution $f_D$ est tel que : $0 < f_D < 1$. Chaque deuxième impulsion de tension d'écriture 202 présente une certaine durée d202, et chaque première impulsion de tension d'écriture 201 présente une certaine durée d201, telles que :

$$d201 < \tau_D$$

$$d202 < \tau_D$$

$$d201 < \Delta T < \tau_D$$

$$d202 < \Delta T < \tau_D$$

La durée $\Delta T$ peut typiquement être de l'ordre du temps de relaxation $\tau_D$ divisé par le nombre d'états résistifs du dispositif de modulation 11.

Lorsque le dispositif de modulation 11 est réalisé à partir de plusieurs dispositifs memristifs :

- le coefficient de diminution $f_D$ est typiquement défini par la probabilité de RESET $P_{RESET}$ du dispositif de modulation 11, qui est elle-même réglée grâce à l'amplitude des deuxièmes impulsions de tension d'écriture 202 ou grâce à un générateur de nombres aléatoires PNRG ;
- le temps de relaxation $\tau_D$ est typiquement défini par la probabilité de SET $P_{SET}$ du dispositif de modulation 11, qui est elle-même réglée grâce à l'amplitude des premières impulsions de tension d'écriture 201 ou grâce à un générateur de nombres aléatoires PNRG.

Lorsque le premier élément résistif 11 est réalisé à partir d'un unique dispositif memristif multivalué :

- le coefficient de diminution $f_D$ est typiquement défini par l'amplitude et/ou la durée d202 des deuxièmes impulsions de tension d'écriture 202 ;
- le temps de relaxation $\tau_D$ est typiquement défini par l'amplitude et/ou la durée d201 des premières impulsions de tension d'écriture 201.

La figure 4a montre une synapse artificielle 1 comportant un dispositif de modulation 11 selon l'un des premier ou deuxième modes de réalisation de l'invention, et un deuxième dispositif de modulation 12. La synapse artificielle 1 présente :

- un premier terminal Ti apte à être connecté à un premier neurone artificiel i, également appelé neurone présynaptique i ou neurone d'entrée i, et
- un deuxième terminal Tj apte à être connecté à un deuxième neurone artificiel j, également appelé neurone postsynaptique j ou neurone de sortie j.

Un neurone artificiel est un composant actif, qui est appelé :

- « neurone d'entrée » ou « neurone présynaptique » lorsqu'il est connecté en aval d'une synapse artificielle, et
- « neurone de sortie » ou « neurone postsynaptique » lorsqu'il est connecté en amont d'une synapse artificielle.

Selon la quantité de synapses artificielles connectées à lui et leur agencement, un neurone artificiel peut présenter simultanément une ou plusieurs fonctions de neurone d'entrée, et une ou plusieurs fonctions de neurone de sortie. Alternativement, un neurone artificiel peut ne présenter qu'une ou plusieurs fonctions de neurone d'entrée, ou une ou plusieurs fonctions de neurone de sortie. Les neurones artificiels peuvent être actifs ou inactifs : un neurone artificiel est actif lorsqu'à l'instant considéré, il émet une impulsion. La durée de son état « actif » peut être prédéterminée.

Le dispositif de modulation 11 reçoit en entrée un signal d'horloge clk d'une part, et une impulsion de tension d'entrée $V_{in}$, émise par le neurone présynaptique i, d'autre part. Le dispositif de modulation 11 peut émettre en sortie une impulsion de courant $I_{STP}$, qui est transmise au neurone postsynaptique j. Au sein de la synapse artificielle 1, le dispositif de modulation 11 réalise avantageusement un mécanisme de plasticité à court terme STP, selon lequel la conductance équivalente $y_i(t)$ varie :

- en fonction d'une activité du neurone présynaptique i, c'est-à-dire en fonction des impulsions de tension d'entrée $V_{in}$ émises par le neurone présynaptique i, et
- en fonction des signaux d'horloge régulièrement reçus.

Les impulsions de tension $V_{in}$ émises par le neurone présynaptique i sont également appelées « impulsions présynaptiques ». Les impulsions présynaptiques sont typiquement toutes de même durée et de même amplitude.

Le deuxième dispositif de modulation 12 peut recevoir en entrée une impulsion de tension $V_{LTP}$, et émettre en sortie une impulsion de courant $I_{out}$. Le deuxième dispositif de modulation 12 présente une conductance équivalente $w_{ij}$ variable et réalise avantageusement un mécanisme de plasticité à long terme LTP, selon lequel la deuxième conductance équivalente $w_{ij}$ varie en fonction d'une activité du neurone postsynaptique j et d'une chronologie entre l'activité du neurone postsynaptique j et l'activité du neurone présynaptique i. Autrement dit, la conductance équivalente $w_{ij}$ du deuxième dispositif de modulation 12 varie en fonction des impulsions de tension émises par le neurone postsynaptique j, également appelées « impulsions postsynaptiques », et en fonction des instants d'émission des impulsions postsynaptiques relativement aux instants d'émission des impulsions présynaptiques. Les impulsions postsynaptiques sont typiquement toutes de même durée et de même amplitude.

Le deuxième dispositif de modulation 12 peut comporter un ou plusieurs dispositifs memristif de type binaire, ou alternativement un ou plusieurs dispositifs memristifs de type multivalué.

Un convertisseur courant-tension 15 connecte la sortie du dispositif de modulation 11 à l'entrée du deuxième dispositif de modulation 12. Le convertisseur courant-tension 15 convertit l'impulsion de courant $I_{STP}$ en l'impulsion de tension $V_{LTP}$.

La figure 4b montre une implémentation particulière du convertisseur courant-tension 15 de la synapse artificielle 1, selon laquelle le convertisseur courant-tension 15 comporte :

- un élément résistif 13 de conductance $y_{max}$ fixe, et
- un amplificateur opérationnel 14.

La conductance $y_{max}$ de l'élément résistif 13 est préférentiellement sensiblement égale à la conductance maximale possible pour la conductance équivalente $y_i(t)$ du dispositif de modulation 11.

L'amplificateur opérationnel 14 présente une branche d'entrée négative, une branche d'entrée positive et une branche de sortie. La branche d'entrée positive est reliée à la masse. La branche d'entrée négative est reliée au dispositif de modulation 11. La branche de sortie est reliée au deuxième dispositif de modulation 12. La branche d'entrée négative et la branche de sortie sont connectées entre elles via l'élément résistif 13.

Le circuit électrique de la synapse artificielle 1 est ainsi tel qu'un courant $I_{out}(t)$ mesuré en sortie du deuxième dispositif de modulation 12 s'exprime, en fonction d'une tension $V_{LTP}(t)$ en entrée du deuxième élément résistif 12 :

$$I_{out}(t) = V_{LTP}(t) \times w_{ij}$$

La tension $V_{LTP}(t)$ en entrée du deuxième élément résistif 12 s'exprime quant à elle :

$$V_{LTP}(t) = -V_{in} \times \frac{y_i(t)}{y_{max}}$$

On obtient une modulation de la conductance équivalente $w_{ij}$ du deuxième dispositif de modulation 12 par la conductance équivalente $y_i(t)$ du dispositif de modulation 11. Autrement dit, la synapse artificielle 1 permet avantageusement une modulation d'un mécanisme à long terme LTP par un mécanisme à court terme STP.

Le dispositif de modulation 11 et le deuxième dispositif de modulation 12 d'une même synapse artificielle 1 utilisent préférentiellement tous les deux une même technologie memristive. Par exemple, si le dispositif de modulation 11 utilise des dispositifs memristifs de type CBRAM, le ou les dispositifs memristifs du deuxième dispositif de modulation 12 sont de préférence également de type CBRAM.

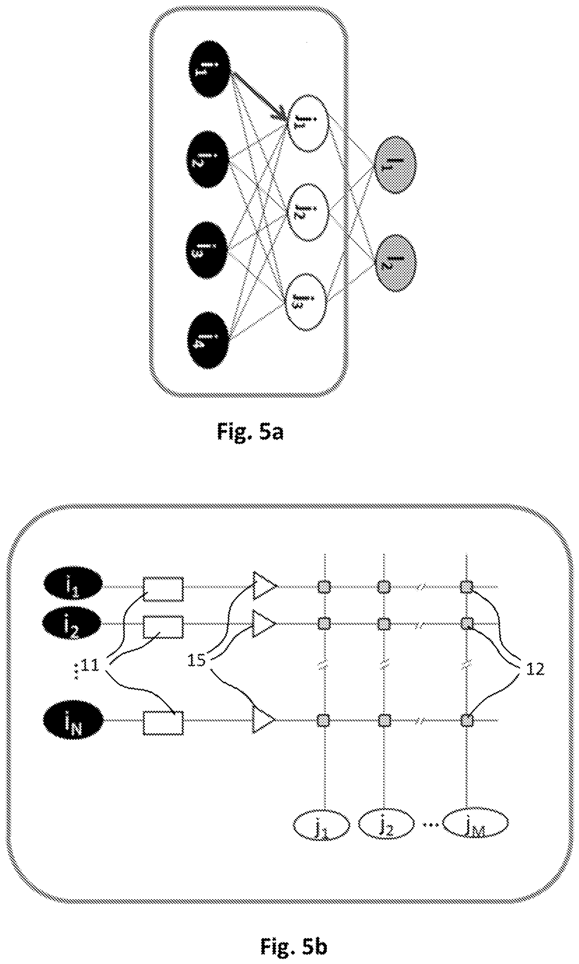

La figure 5a montre schématiquement un réseau de neurones artificiels, comportant :

- une première couche comprenant des neurones artificiels $i_1$ à $i_4$,
- une deuxième couche comprenant des neurones artificiels $j_1$ à $j_3$ et
- une troisième couche comprenant des neurones artificiels $l_1$ et $l_2$.

Chaque connexion entre deux neurones artificiels est réalisée au moyen d'une synapse artificielle 1, telle que précédemment décrite. Alternativement, seulement une partie des connexions entre neurones artificiels pourrait être réalisée au moyen de synapses artificielles 1.

Dans l'exemple de la figure 5a, chaque neurone artificiel de la première couche est connecté à tous les neurones artificiels de la deuxième couche, et chaque neurone artificiel de la deuxième couche est connecté à tous les neurones artificiels de la troisième couche. Alternativement, chaque neurone artificiel de la première couche pourrait n'être connecté qu'à une partie des neurones artificiels de la deuxième couche et/ou chaque neurone artificiel de la deuxième couche pourrait n'être connecté qu'à une partie des neurones artificiels de la troisième couche. Dans l'exemple de la figure 5a, le réseau comporte trois couches, mais alternativement le réseau pourrait comporter uniquement deux couches, ou bien quatre couches ou plus. Dans l'exemple de la figure 5a, chaque couche comporte une pluralité de neurones artificiels, mais alternativement au moins une couche pourrait ne comporter qu'un seul neurone artificiel.

La figure 5b montre en particulier un exemple de circuit électrique connectant chaque neurone artificiel i de la première couche à chaque neurone artificiel j de la deuxième couche, au moyen d'une pluralité de synapses artificielles 1 selon un aspect de l'invention. Dans l'exemple de la figure 5b, la première couche comporte N neurones artificiels i et la deuxième couche comporte M neurones artificiels j. Le circuit électrique comporte autant de dispositifs de modulation 11 que de neurones artificiels i dans la première couche, c'est-à-dire N dispositifs de modulation 11 dans l'exemple de la figure 5b.

Le circuit électrique comporte autant de convertisseurs courant-tension 15 que de dispositifs de modulation 11, c'est-à-dire N convertisseurs courant-tension 15 dans l'exemple de la figure 5b. Le circuit électrique comporte autant de deuxièmes dispositifs de modulation 12 que de connexions synaptiques, c'est-à-dire $N \times M$ deuxièmes dispositifs de modulation 12 dans l'exemple de la figure 5b où chaque neurone artificiel i de la première couche est connecté à chaque neurone artificiel j de la deuxième couche.

Chaque neurone artificiel i de la première couche est ainsi connecté à chaque neurone artificiel j de la deuxième couche via une synapse artificielle 1 comportant un dispositif de modulation 11, un convertisseur courant-tension 15 et un deuxième dispositif de modulation 12. Chaque dispositif de modulation 11 peut être commun à plusieurs synapses artificielles 1 : dans l'exemple de la figure 5b, chaque dispositif de modulation 11 est commun à M synapses artificielles. En revanche, chaque deuxième dispositif de modulation 12 est propre à une seule synapse artificielle 1. Dans une implémentation matricielle comme celle de la figure 5b, un dispositif de sélection (non représenté) permet d'accéder individuellement à chaque deuxième dispositif de modulation 12.

## Revendications

1. Dispositif (11) de modulation configuré pour une synapse artificielle connectant un premier neurone artificiel et un deuxième neurone artificiel d'un réseau de neurones artificiels, ledit premier neurone artificiel étant apte à émettre une impulsion de tension d'entrée ($V_{in}$), dite impulsion présynaptique, et ledit deuxième neurone artificiel étant apte à émettre une impulsion, dite impulsion postsynaptique, le dispositif de modulation comportant

   - un ou plusieurs dispositifs memristifs (Mr1, Mr2) ayant deux bornes et se comportant comme une conductance dont la valeur est modifiable par application d'un courant ou d'une tension à ses bornes, et
   - un bloc de contrôle (Ct1) connecté à chacun desdits un ou plusieurs dispositifs memristifs (Mr1, Mr2),

   le dispositif de modulation (11) ayant une conductance équivalente yi(t) réalisée par le ou les dispositifs memristifs (Mr1, Mr2) et le bloc de contrôle (Ct1) ayant des moyens pour :

   - recevoir un signal d'horloge (clk) et réaliser une première modification de la conductance équivalente yi(t) à la réception de chaque signal d'horloge (clk), les moyens du bloc de contrôle (Ct1) pour réaliser la première modification de la conductance équivalente yi(t) comprenant des moyens pour émettre une impulsion d'un premier type à destination de chacun desdits un ou plusieurs dispositifs memristifs (Mr1, Mr2),
   - recevoir l'impulsion de tension d'entrée ($V_{in}$) émise par ledit premier neurone et réaliser une deuxième modification de la conductance équivalente yi(t) à la réception de chaque impulsion de tension d'entrée ($V_{in}$), les moyens du bloc de contrôle (Ct1) pour réaliser la deuxième modification de la conductance équivalente yi(t) comprenant des moyens pour émettre une impulsion d'un deuxième type à destination de chacun desdits un ou plusieurs dispositifs memristifs (Mr1, Mr2)

les première et deuxième modifications étant de sens opposé.

2. Dispositif (11) de modulation selon la revendication précédente **caractérisé en ce que** la première modification en valeur absolue est strictement inférieure à la deuxième modification en valeur absolue.

3. Dispositif (11) de modulation selon l'une quelconque des revendications précédentes **caractérisé en ce que** le ou les dispositifs memristifs (Mr1, Mr2) sont un dispositif CBRAM ou un dispositif OxRAM.

4. Dispositif (11) de modulation selon l'une quelconque des revendications précédentes,
   deux signaux d'horloge consécutifs étant séparés par une durée $\Delta T$, les caractéristiques de l'impulsion du deuxième type étant fonction d'un coefficient de diminution fo et d'un temps de relaxation $\tau_D$, le coefficient de diminution $f_D$ étant tel que : $0 < f_D < 1$, l'impulsion du deuxième type présentant une durée d202, et l'impulsion du premier type présentant une durée d201, telles que :

$$d201 < \tau_D$$

$$d202 < \tau_D$$

$$d201 < \Delta T < \tau_D$$

$$d202 < \Delta T < \tau_D.$$

5. Synapse artificielle (1) connectant un premier neurone artificiel et un deuxième neurone artificiel d'un réseau de neurones artificiels comportant un dispositif de modulation (11) selon l'une quelconque des revendications précédentes, ledit premier neurone artificiel étant apte à émettre une impulsion de tension d'entrée ($V_{in}$), dite impulsion présynaptique, et ledit deuxième neurone étant apte à émettre une impulsion, dite impulsion postsynaptique.

6. Réseau de neurones artificiels comportant un ou plusieurs premiers neurones artificiels et un ou plusieurs deuxièmes neurones artificiels, chacun desdits premiers neurones artificiels étant connecté à chacun desdits deuxièmes neurones artificiels par une synapse artificielle selon la revendication précédente, chacun desdits premiers neurones artificiels étant apte à émettre une impulsion (Vin), dite impulsion présynaptique, et chacun desdits deuxièmes neurones artificiels étant apte à émettre une impulsion, dite impulsion postsynaptique.

7. Procédé de modulation au moyen d'un dispositif de modulation (11) selon l'une quelconque des revendications 1 à 4, comportant les étapes suivantes :

   - le bloc de contrôle (Ct1) réalise la première modification de la conductance équivalente yi(t) à la réception de chaque signal d'horloge (clk) en émettant une impulsion d'un premier type à destination de chacun desdits un ou plusieurs dispositifs memristifs (Mr1, Mr2)
   - le bloc de contrôle (Ct1) réalise la deuxième modification de la conductance équivalente yi(t) à la réception de chaque impulsion de tension d'entrée (Vin) émise par ledit premier neurone artificiel en émettant une impulsion d'un deuxième type à destination de chacun desdits un ou plusieurs dispositifs memristifs (Mr1, Mr2) les première et deuxième modifications étant de sens opposé.

**Patentansprüche**

1. Modulationsvorrichtung (11), die für eine künstliche Synapse konfiguriert ist, die ein erstes künstliches Neuron und ein zweites künstliches Neuron eines künstlichen neuronalen Netzes verbindet, wobei das erste künstliche Neuron in der Lage ist, einen Eingangsspannungsimpuls (Vin), den sogenannten präsynaptischen Impuls, zu senden, und das zweite künstliche Neuron in der Lage ist, einen Impuls, den sogenannten postsynaptischen Impuls, zu senden, wobei die Modulationsvorrichtung umfasst:

   - eine oder mehrere memristive Vorrichtungen (Mr1, Mr2), die zwei Anschlüsse haben und sich wie ein Leitwert verhalten, dessen Wert durch Anlegen eines Stroms oder einer Spannung an seinen Anschlüssen veränderbar ist, und
   - einen Steuerblock (Ct1), der mit jeder der einen oder mehreren memristiven Vorrichtungen (Mr1, Mr2) verbunden ist,

wobei die Modulationsvorrichtung (11) einen äquivalenten Leitwert yi(t) aufweist, der durch die memristive(n) Vorrichtung(en) (Mr1, Mr2) realisiert wird, und der Steuerblock (Ct1) Mittel aufweist um:

   - ein Taktsignal (clk) zu empfangen und eine erste Änderung des äquivalenten Leitwerts yi(t) beim Empfang jedes Taktsignals (clk) durchzuführen, wobei die Mittel des Steuerblocks (Ct1) zum Durchführen der ersten Änderung des äquivalenten Leitwerts yi(t) Mittel zum Senden eines Impulses eines ersten Typs an jede der einen oder mehreren memristiven Vorrichtungen (Mr1, Mr2) umfassen,
   - den von dem ersten Neuron gesendeten Eingangsspannungsimpuls (Vin) zu empfangen und beim Empfang jedes Eingangsspannungsimpulses (Vin) eine zweite Änderung des äquivalenten Leitwerts yi(t) durchzuführen, wobei die Mittel des Steuerblocks (Ct1) zum Durchführen der zweiten Änderung des äquivalenten Leitwerts yi(t) Mittel zum Senden eines Impulses eines zweiten Typs an jede der einen oder mehreren memristiven Vorrichtungen (Mr1, Mr2) umfassen, wobei die erste und die zweite Änderung in entgegengesetzter Richtung verlaufen.

2. Modulationsvorrichtung (11) nach dem vorhergehenden Anspruch, **dadurch gekennzeichnet, dass** die erste Änderung im Absolutwert strikt kleiner ist als die zweite Änderung im Absolutwert.

3. Modulationsvorrichtung (11) nach einem der vorhergehenden Ansprüche, **dadurch gekennzeichnet, dass** die memristive(n) Vorrichtung(en) (Mr1, Mr2) eine CBRAM-Vorrichtung oder eine OxRAM-Vorrichtung ist (sind).

4. Modulationsvorrichtung (11) nach einem der vorhergehenden Ansprüche, wobei zwei aufeinanderfolgende Taktsignale durch eine Dauer $\Delta T$ voneinander getrennt sind, wobei die Eigenschaften des Impulses der zweiten Art eine Funktion eines Minderungskoeffizienten $f_D$ und einer Relaxationszeit $T_D$ sind und der Minderungskoeffizient $f_D$ so beschaffen ist, dass: $0 < f_D < 1$, wobei der Impuls des zweiten Typs eine Dauer d202 aufweist und der Impuls des ersten Typs eine Dauer d201, so dass:

$$d201 < \tau_D$$

$$d202 < \tau_D$$

$$d201 < \Delta T < \tau_D$$

$$d202 < \Delta T < \tau_D.$$

5. Künstliche Synapse (1), die ein erstes künstliches Neuron und ein zweites künstliches Neuron eines künstlichen neuronalen Netzes verbindet, das eine Modulationsvorrichtung (11) nach einem der vorhergehenden Ansprüche umfasst, wobei das erste künstliche Neuron in der Lage ist, einen Eingangsspannungsimpuls (Vin), den sogenannten präsynaptischen Impuls, zu senden, und das zweite Neuron in der Lage ist, einen Impuls, den sogenannten postsynaptischen Impuls, zu senden.

6. Künstliches neuronales Netz mit einem oder mehreren ersten künstlichen Neuronen und einem oder mehreren zweiten künstlichen Neuronen, wobei jedes der ersten künstlichen Neuronen mit jedem der zweiten künstlichen Neuronen über eine künstliche Synapse gemäß dem vorhergehenden Anspruch verbunden ist, wobei jedes der ersten künstlichen Neuronen in der Lage ist, einen Impuls ($V_{in}$), den sogenannten präsynaptischen Impuls, zu senden, und jedes der zweiten künstlichen Neuronen in der Lage ist, einen Impuls, den sogenannten postsynaptischen Impuls, zu senden.

7. Verfahren zur Modulation mittels einer Modulationsvorrichtung (11) nach einem der Ansprüche 1 bis 4, das die folgenden Schritte umfasst:

   - der Steuerblock (Ct1) führt die erste Änderung des äquivalenten Leitwerts yi(t) beim Empfang jedes Taktsignals (clk) durch, indem er einen Impuls eines ersten Typs an jede der einen oder mehreren memristiven Vorrichtungen (Mr1, Mr2) sendet
   - der Steuerblock (Ct1) führt die zweite Änderung des äquivalenten Leitwerts $y_i(t)$ beim Empfang jedes vom ersten künstlichen Neuron gesendeten Eingangsspannungsimpulses ($V_{in}$) durch, indem er einen Impuls eines zweiten Typs an jede der einen oder mehreren memristiven Vorrichtungen (Mr1, Mr2) sendet,

   wobei die erste und zweite Änderung in entgegengesetzter Richtung verlaufen.

**Claims**

1. A modulation device (11) configured for an artificial synapse connecting a first artificial neuron and a second artificial neuron of an artificial neural network, said first artificial neuron being capable of emitting an input voltage pulse ($V_{in}$), referred to as a presynaptic pulse, and said second artificial neuron being capable of emitting a pulse, referred to as a postsynaptic pulse, the modulation device including:

   - one or more memristive devices (Mr1, Mr2) having two terminals and behaving as a conductance the value of which can be modified by applying a current or a voltage to its terminals, and
   - a control block (Ct1) connected to each of said one or more memristive devices (Mr1, Mr2),

   the modulation device (11) having an equivalent conductance yi(t) made by the memristive device(s) (Mr1, Mr2) and the control block (Ct1) having means for:

   - receiving a clock signal (clk) and carrying out first modification of the equivalent conductance $y_i$(t) upon receiving each clock signal (clk), the means of the control block (Ct1) for carrying out first modification of the equivalent conductance $y_i$(t) comprising means for emitting a pulse of a first type to each of said one or more memristive devices (Mr1, Mr2),
   - receiving the input voltage pulse ($V_{in}$) emitted by said first neuron and carrying out second modification of the equivalent conductance $y_i$(t) upon receiving each input voltage pulse ($V_{in}$), the means of the control block (Ct1) for carrying out second modification of the equivalent conductance $y_i$(t) comprising means for emitting a pulse of a second type to each of said one or more memristive devices (Mr1, Mr2),

   the first and second modifications having opposite directions.

2. The modulation device (11) according to the preceding claim, **characterised in that** the first modification in absolute value is strictly lower than the second modification in absolute value.

3. The modulation device (11) according to any of the preceding claims, **characterised in that** the memristive device(s) (Mr1, Mr2) are a CBRAM device or an OxRAM device.

4. The modulation device (11) according to any of the preceding claims, two consecutive clock signals being separated by a duration $\Delta T$, the characteristics of the pulse of the second type being a function of a decrease coefficient $f_D$ and a relaxation time $T_D$, the decrease coefficient $f_D$ being such as: $0 < f_D < 1$, the pulse of the second type having a duration d202, and the pulse of the first type having a duration d201, such that:

$$d201 < \tau_D$$

$$d202 < \tau_D$$

$$d201 < \Delta T < \tau_D$$

$$d202 < \Delta T < \tau_D.$$

5. An artificial synapse (1) connecting a first artificial neuron and a second artificial neuron of an artificial neural network including a modulation device (11) according to any of the preceding claims, said first artificial neuron being capable of emitting an input voltage pulse ($V_{in}$), referred to as a presynaptic pulse, and said second neuron being capable of emitting a pulse, referred to as a postsynaptic pulse.

6. An artificial neural network including one or more first artificial neurons and one or more second artificial neurons, each of said first artificial neurons being connected to each of said second artificial neurons by an artificial synapse according to the preceding claim, each of said first artificial neurons being capable of emitting a pulse (Vin), referred to as a presynaptic pulse, and each of said second artificial neurons being capable of emitting a pulse, referred to as a postsynaptic pulse.

7. A modulation method by means of a modulation device (11) according to any of claims 1 to 4, comprising the following steps:

  - the control block (Ct1) carries out first modification of the equivalent conductance $y_i(t)$ upon receiving each clock signal (clk) by emitting a pulse of a first type to each of said one or more memristive devices (Mr1, Mr2);
  - the control block (Ct1) carries out second modification of the equivalent conductance $y_i(t)$ upon receiving each input voltage pulse ($V_{in}$) emitted by said first artificial neuron by emitting a pulse of a second type to each of said one or more memristive devices (Mr1, Mr2);

the first and second modifications having opposite directions.

clk    $V_{in}$    11

- Ct1 -

- Mr1 -    $y_i(t)$

**Fig. 1a**

clk    $V_{in}$    11

- PRNG -    - Ct1 -

- Mr1 -    - Mr2 -    $y_i(t)$

**Fig. 1b**

$V_{in}$    11

clk    - Ct1 -

Mr1

WL

$y_i(t)$

BL

**Fig. 2a**    $I_{STP}$

$V_{in}$    11

clk    - Ct1 -

WL    $y_i(t)$

Mr1    ...    BL    $I_{STP}$

Mr2    **Fig. 2b**    MrN

**Fig. 3**

**Fig. 4a**

**Fig. 4b**

**Fig. 5a**

**Fig. 5b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D. GARBIN et al.** Variability-tolerant convolutional neural network for pattern recognition applications based on OxRAM synapses. *IEDM,* 2014
- **T. WERNER et al.** Real-time decoding of brain activity by embedded Spiking Neural Networks using OxRAM synapses. *ISCAS,* 2016
- **M. SURI et al.** Phase change memory as synapse for ultra-dense neuromorphic systems : application to complex visual pattern extraction. *IEDM,* 2011

- **O. BICHLER et al.** Visual pattern extraction using energy-efficient "2-PCM Synapse" neuromorphic architecture. *TED,* 2012
- **PALMA et al.** Stochastic neuron design using conductive bridge RAM. *actes de NanoArch,* 2013, 95-100